(19) Europäisches Patentamt
European Patent Office
Office européen des brevets

(11) Veröffentlichungsnummer: **0 348 767**
**A2**

(12) **EUROPÄISCHE PATENTANMELDUNG**

(21) Anmeldenummer: **89111040.5**

(22) Anmeldetag: **19.06.89**

(51) Int. Cl.4: **A01N 49/00 , //(A01N49/00, 43:90,43:40,33:12)**

(30) Priorität: **25.06.88 DE 3821520**

(43) Veröffentlichungstag der Anmeldung: **03.01.90 Patentblatt 90/01**

(84) Benannte Vertragsstaaten: **BE CH DE FR GB LI NL SE**

(71) Anmelder: **BASF Aktiengesellschaft**
**Carl-Bosch-Strasse 38**
**D-6700 Ludwigshafen(DE)**

(72) Erfinder: **Rademacher, Wilhelm, Dr.**
**Austrasse 1**
**D-6703 Limburgerhof(DE)**
Erfinder: **Schmidt, Oskar, Dr.**
**Gerbodweg 33**
**D-6900 Heidelberg(DE)**
Erfinder: **Grossmann, Klaus, Dr.**
**Wilhelm-Busch-Strasse 5**
**D-6703 Limburgerhof(DE)**
Erfinder: **Jung, Johann, Prof. Dr.**
**Hardenburgstrasse 19**
**D-6703 Limburgerhof(DE)**
Erfinder: **Doerffling, Karl, Prof. Dr.**
**Baggesenstieg 17**
**D-2000 Hamburg 65(DE)**
Erfinder: **Flores, Agnes**
**24 Oliva Street Villa Florencia Subd.**
**Novalichen Quezon City(PH)**

(54) **Mittel zur Verbesserung des pflanzlichen Stressverhaltens.**

(57) Mittel zur Verbesserung des Verhaltens von Pflanzen gegenüber abiotischem Streß, enthaltend eine synergistische Mischung aus mindestens einem Wirkstoff aus der Gruppe der Abscisinsäure und ihren Analogen mit mindestens einem Wirkstoff aus der Gruppe der Wachstumsretardantien.

EP 0 348 767 A2

Xerox Copy Centre

## Mittel zur Verbesserung des pflanzlichen Streßverhaltens

Die Erfindung betrifft Mittel zur Verbesserung des Verhaltens von Pflanzen gegenüber abiotischem Streß, welche eine Mischung von Wirkstoffen mit synergistischer Wirkung enthalten und Verfahren zur Verbesserung des pflanzlichen Streßverhaltens.

Abiotische Streßfaktoren wie Wassermangel, Bodenversalzung und zu niedrige oder zu hohe Temperaturen limitieren in erheblichem Umfang die Produktivität von landwirtschaftlich und gärtnerisch genutzten Pflanzen. Aber auch bei krautigen Zierpflanzen und bei Ziergehölzen können ungünstige klimatische Bedingungen und ebenso auch künstlich verursachte Streßbedingungen wie z.B. Verpflanzungsschock oder große Mengen an Streusalzen im Wurzelbereich zu deutlichen wirtschaftlichen Verlusten führen.

Bis zu einem gewissen Grad lassen sich die oben beschriebenen Schädigungen durch physikalische Verfahren vermeiden oder verringern: Neben dem Beseitigen der eigentlichen Schadensursache wie Wasserzufuhr bei Wassermangel oder Heizen bei Frostgefahr kommen in beschränktem Umfang filmbildende Substanzen, z.B. gegen Wasserverlust oder lichtreflektierende Verbindungen, z.B. gegen eine übermäßige Erhitzung der Sproßteile, zum Einsatz.

Bekannt ist, daß das natürlich vorkommende Pflanzenhormon Abscisinsäure (nachstehend abgekürzt mit ABA, siehe Römpps Chemie-Lexikon, 8. Aufl., S. 26 und 27, 1979) das pflanzliche Streßverhalten günstig zu beeinflussen vermag. Dabei können sich Pflanzen bis zu einem gewissen Umfang durch die Veränderung ihres endogenen Gehalts an ABA an bereits eingetretene Streßsituation anpassen. Eine künstliche Zugabe von ABA kann dementsprechend genutzt werden, um Pflanzen auf zu erwartende Streßsituationen einzustellen. Auf diese Weise läßt sich beispielsweise ein übermäßiger Wasserverbrauch vermeiden und mithin eine vorgegebene Menge an Wasser effizienter ausnutzen. Einem Einsatz der ABA in der landwirtschaftlichen Praxis steht jedoch ihr sehr hoher Preis und die ungenügende Wirkungsdauer entgegen.

Positive Effekte auf das pflanzliche Streßverhalten lassen sich auch mit preisgünstigeren synthetischen Analogen der ABA erzielen (vgl. Rademacher et al. 1987 in: Plant Growth Regulators for Agricultural and Amenity Use [A.F. Hawkins, A.D. Stead, N.J. Pinfield, Eds.], BCPC Publications, Thornton Heath, GB, pp 53-66). Jedoch ist es auch hier wünschenswert, die Substanzkosten pro Flächeneinheit weiter zu reduzieren und die Wirkungsdauer der Verbindungen zu verlängern.

Weiterhin ist bekannt, daß man die Widerstandskraft von Pflanzen gegenüber abiotischem Streß auch durch Wachstumsretardantien und mit ihnen strukturell verwandten Verbindungen verbessern kann (J. Jung, W. Rademacher [1983] in: Plant Growth Regulating Chemicals, Vol. 1 [L.G. Nickel, Ed.], CRC Press, Boca Raton, USA, Seiten 253-271; R.A. Fletcher, G. Hofstra [1985], Plant Cell Physiol. 26, 775; J.F. Shanahan, D.C. Nielsen [1987], Agron.J. 79, 103; L.X. Zhang et al. [1987], Crop Sci. 27, 531; H.M. Anderson, N.D.S. Huband [1987] in: Plant Growth Regulators for Agricultural and Amenity Use [A.F. Hawkins, A.D. Stead, N.J. Pinfield, Eds.], BCPC Publications, Thornton Heath, GB, pp. 45-50). Unter dem Begriff Wachstumsretardantien werden allgemein Verbindungen verstanden, die das Längenwachstum des Sprosses reduzieren, ohne dabei Pflanzenschäden zu verursachen. Abgesehen von wenigen Ausnahmen hat sich auch der Einsatz von Wachstumsretardantien gegen Schäden durch abiotischen Streß nicht in der landwirtschaftlichen Praxis durchsetzen können. Haupthindernis ist hier eine zu hohe Unsicherheit im Behandlungserfolg.

Der Erfindung lag nun die Aufgabe zugrunde, ein effektiveres Mittel zur Verbesserung des pflanzlichen Streßverhaltens zu finden.

Demgemäß wurde gefunden, daß eine synergistische Mischung aus mindestens einem Wirkstoff aus der Gruppe der Abscisinsäure und ihren Analogen mit mindestens einem Wirkstoff aus der Gruppe der Wachstumsretardantien besonders gut zur Regulierung des Verhaltens von Pflanzen gegenüber abiotischem Streß geeignet ist.

Die kombinierte Anwendung von ABA oder ABA-Analogen mit Wachstumsretardantien erhöht die Widerstandskraft von Pflanzen stärker als aus der Summe der Einzeleffekte bzw. nach einer Berechnung gemäß S.R. Colby (Weeds 15, 20) zu erwarten gewesen wäre. Gleichzeitig wurde auch eine Verlängerung des Andauerns der Resistenz verzeichnet.

Aus der ersten Gruppe sind neben Abscisinsäure I

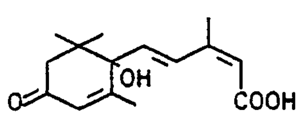

I,

auch analoge Verbindungen, d.h. solche Verbindungen, die in ihrer Wirkung der Abscisinsäure vergleichbar sind, gut geeignet. Solche analogen Verbindungen sind beispielsweise die in EP-B1-078 509 aufgeführten acetylenischen Verbindungen, insbesondere solche der Struktur (II)

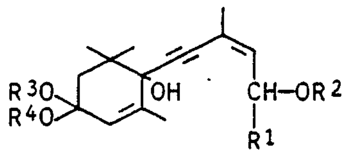

II,

worin $R^1$ Wasserstoff oder den Rest $OR^2$ bedeutet, der Rest $R^2$ für $C_1$-$C_6$-Alkyl steht oder in der $R^1$ für den Rest ORS steht und $R^5$ zusammen mit $R^2$ eine Alkylenkette $-(CH_2)_n-$, die durch eine oder zwei $C_1$-$C_4$-Alkylgruppen substituiert sein kann, bildet, wobei n 2, 3 oder 4 ist. Besonders bevorzugt sind hieraus die Verbindungen IIa und IIb:

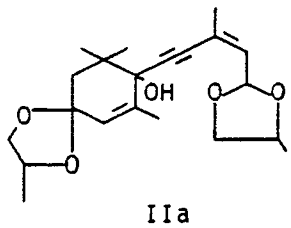

IIa

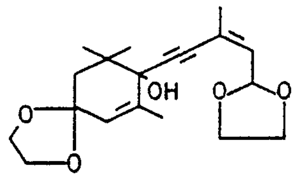

IIb

Als Wachstumsretardantien lassen sich die folgenden Verbindungen mit gutem Erfolg als Synergisten verwenden:

A) N,N-Dimethylpiperidiniumsalze III und N,N,N-Trimethyl-N-2-chlorethylammoniumsalze IV, insbesondere N,N-Dimethylpiperidiniumchlorid IIIa und N,N,N-Trimethyl-N-2-chlorethylammoniumchlorid IVa. Solche Ammoniumsalze sind z.B. in der DE-OS 22 07 575 oder der deutschen Anmeldung P 37 09 806.3 (EP 88104320.2) beschrieben. Die Salze leiten sich von anorganischen oder organischen, nicht phytotoxischen Säuren, vorzugsweise HBr oder HCl, ab.

B) Norbornadiazetine wie sie in den DE-OS 26 15 878 und 27 42 034 beschrieben sind. Hervorzuheben sind hier Verbindungen der Struktur V und VI

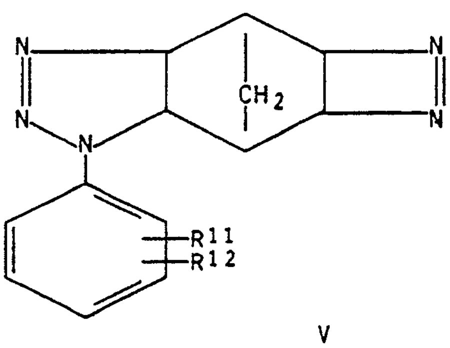

V

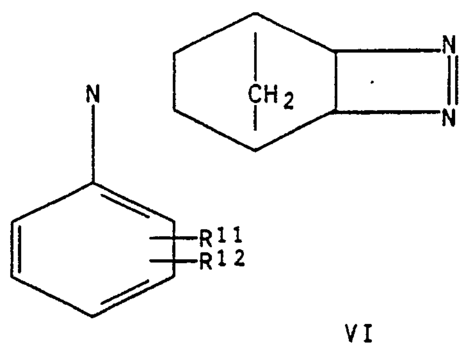

VI

worin die Reste $R^{11}$ und $R^{12}$ für Wasserstoff, Halogen, wie Brom, Chlor oder Fluor, $C_1$-$C_4$-Alkyl wie Methyl, Ethyl, Propyl, Butyl, Trifluormethyl oder Nitro stehen. Besonders bevorzugt ist die para-Chlorphenyl substituierten Verbindung Va

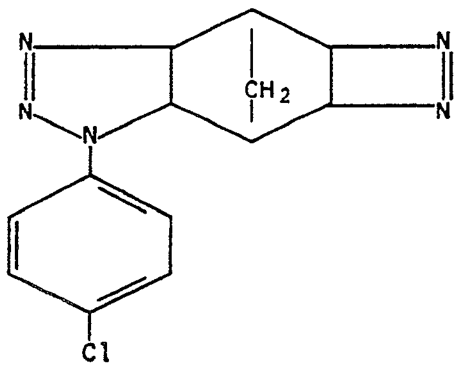

Va

C) Triazolverbindungen der allgemeinen Formeln VII bis IX

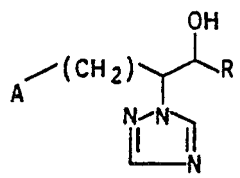

VII

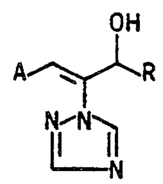

VIII

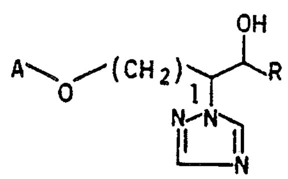

IX

wobei A unsubstituiertes oder durch Halogen, $C_1$-$C_4$-Alkyl, $C_1$-$C_4$-Alkoxy oder $CF_3$ substituiertes Phenyl oder Cyclohexyl bedeutet und R tert.-Butyl oder die Gruppe

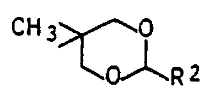

bedeutet, in der $R^2$ für Wasserstoff, Methyl oder Ethyl steht und l die Zahlen 1 oder 2 darstellt.

Wachstumsregulatorisch wirksame Triazolverbindungen sind z.B. in der europäischen Anmeldung 88104320.2, in British Crop Protection Conference - Weeds 1982, Vol. 1, BCPC Publications, Croydon, 1982, Seite 3, in Plant Cell Physiol. 25, 611, in Pestic.Sci. 19, 153, in J.Agron.Crop.Sci. 158, 324 oder in J.Plant Growth Regul. 4, 181 beschrieben.

Besonders hervorzuheben sind Verbindungen, worin der Rest R für eine tert.-Butylgruppe und A für Phenyl, p-Chlorphenyl, p-Trifluormethylphenyl, o,p-Dichlorphenyl oder Cyclohexyl steht. Beispielsweise seien die folgenden Verbindungen aufgeführt:

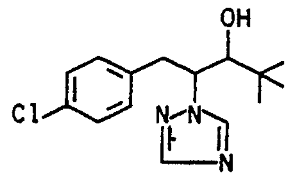

VIIa

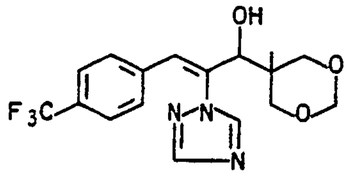

VIIIa

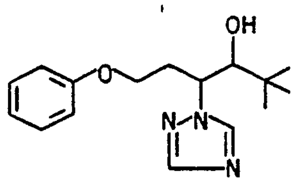

IXa

Die in den erfindungsgemäßen Mitteln enthaltenen Wirkstoffe können gemeinsam oder auch nacheinander in den Lebensraum von Pflanzen gebracht werden. Dies kann geschehen durch eine Saatgutbeizung, eine Applikation über das Substrat (über die Wurzel) oder durch eine Sproßbehandlung.

Je nach gewünschtem Effekt, Applikationsart, Pflanzenspecies, Entwicklungsstadium der zu behandelnden Pflanzen und einzusetzenden Mitteln wird die Aufwandmenge der einzelnen Wirkstoffe variiert. Bei der Saatgutbehandlung werden im allgemeinen Wirkstoffmengen von jeweils 0,001 bis 50 g je Kilogramm Saatgut, vorzugsweise 0,01 bis 10 g benötigt. Für die Wirkstoffe (I) und (II) allerdings Mengen von 1 g bis 1000 g, vorzugsweise 10 g bis 200 g je Kilogramm Saatgut. Für die Blatt- und Substratbehandlung sind im allgemeinen Gaben von 0,01 bis 10 kg/ha, bevorzugt 0,05 bis 3 kg/ha, als ausreichend zu betrachten.

Das Verhältnis Abscisinsäure bzw. Analoge zu Wachstumsretardantien kann in weiten Grenzen schwanken. Bei Applikation über das Substrat hat sich beispielsweise ein Gewichtsverhältnis von 0,1:1 bis 1000:1 bewährt. So können die Verbindungen IIb:Va oder VIIa bis Xa vorzugsweise im Verhältnis 5:1 bis 1000:1, insbesondere 5:1 bis 100:1 angewendet werden. Bei Blattapplikation hat sich beispielsweise ein Gewichtsverhältnis von 100:1 bis 1:100 bewährt. So können die Verbindungen IIa:Va oder VIIa bis Xa im Verhältnis von 50:1 bis 1:50, insbesondere 10:1 bis 1:10 verwendet werden. Bei der Bodenbehandlung kombiniert mit einer Blattbehandlung haben sich Gewichtsverhältnisse von 100:1 bis 1:1000 bewährt. So können die Verbindungen IIb:IIIa vorzugsweise im Verhältnis von 1:1 bis 1:500, insbesondere 1:1 bis 1:100 verwendet werden. Dabei wird das Piperidiniumchlorid IIIa über den Boden appliziert und die Blattbehandlung mit IIb durchgeführt.

Die erfindungsgemäßen Mittel können in Form üblicher Formulierungen angewendet werden wie Lösungen, Emulsionen, Suspensionen, Stäube, Pulver, Pasten und Granulate. Die Anwendungsformen richten sich ganz nach den Verwendungszwecken; sie sollen in jedem Fall eine feine und gleichmäßige Verteilung der wirksamen Substanz gewährleisten. Die Formulierungen werden in bekannter Weise hergestellt, z.B. durch Verstrecken des Wirkstoffs mit Lösungsmitteln und/oder Trägerstoffen, gegebenenfalls unter Verwendung von Emulgiermitteln und Dispergiermitteln, wobei im Falle der Benutzung von Wasser als Verdünnungsmittel auch andere organische Lösungsmittel als Hilfslösungsmittel verwendet werden können. Als Hilfsstoffe kommen dafür im wesentlichen in Frage: Lösungsmittel wie Aromaten (z.B. Xylol, Benzol), chlorierte Aromaten (z.B. Chlorbenzole), Paraffine (z.B. Erdölfraktionen), Alkohole (z.B. Methanol, Butanol), Amine (z.B. Ethanolamin), N,N-Dimethylformamid und Wasser; feste Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel oder sonstige oberflächenaktive Mittel, wie nichtionogene und anionische Emulgatoren (z.B. Polyoxyethylen-Fettalkohol-Ether, Alkylsulfonate) und Dispergiermittel wie Lignin-Sulfitablaugen und Methylcellulose. Bevorzugt ist die Anwendung der erfindungsgemäßen Verbindungen in wäßriger Lösung gegebenenfalls unter Zusatz von mit Wasser mischbaren organischen Lösungsmitteln wie Methanol oder anderen niederen Alkoholen, Aceton, N,N-Dimethylformamid oder N-Methylpyrrolidon. Die Formulierungen enthalten im allgemeinen zwischen 0,1 und 95 Gew.% an Wirkstoffen, vorzugsweise

zwischen 0,5 und 90 Gew.%.

Die Formulierungen bzw. die daraus hergestellten gebrauchsfertigen Zubereitungen, wie Lösungen, Emulsionen, Suspensionen, Pulver, Stäube, Pasten oder Granulate werden in bekannter Weise angewendet, beispielsweise im Vorauflaufverfahren, im Nachauflaufverfahren oder als Beizmittel.

Die erfindungsgemäßen Mittel können in diesen Anwendungsformen auch zusammen mit anderen Wirkstoffen vorliegen, wie z.B. Herbiziden, Insektiziden, anderen Bioregulatoren und Fungiziden, oder auch mit Düngemitteln vermischt und ausgebracht werden.

Beispiele für Formulierungen sind:

I 20 Gewichtsteile einer Mischung aus IIb und Va (1:1) werden in 3 Gewichtsteilen des Natriumsalzes der Diisobutylnaphthalinsulfonsäure, 17 Gewichtsteilen des Natriumsalzes einer Ligninsulfonsäure aus einer Sulfitablauge und 60 Gewichtsteilen pulverförmigem Kieselsäuregel gut vermischt und in einer Hammermühle vermahlen. Durch feines Verteilen der Mischung in 20000 Gewichtsteilen Wasser erhält man eine Spritzbrühe, die 0,1 Gew.% des Wirkstoffs enthält.

II 3 Gewichtsteile einer Mischung aus IIb und IIIa (1:100) werden mit 97 Gewichtsteilen feinteiligem Kaolin innig vermischt. Man erhält auf diese Weise ein Stäubemittel, das 3 Gew.% des Wirkstoffs enthält.

III 30 Gewichtsteile einer Mischung aus IIb mit Va (1:10) werden in einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung der Wirkstoffe mit guter Haftfähigkeit.

IV 40 Gewichtsteile einer Mischung aus IIb mit Va (10:1) werden mit 10 Teilen Natriumsalz eines Phenolsulfonsäure-harnstoff-formaldehyd-Kondensats, 2 Teilen Kieselgel und 48 Teilen Wasser innig vermischt. Man erhält eine stabile wäßrige Dispersion. Durch Verdünnen mit 100 000 Gewichtsteilen Wasser erhält man eine wäßrige Dispersion, die 0,04 Gew.% Wirkstoff enthält.

V 20 Teile einer Mischung aus IIa mit VIIa (1:1) werden mit 2 Teilen Calciumsalz der Dodecylbenzolsulfonsäure, 8 Teilen Fettalkohol-polyglykolether, 2 Teilen Natriumsalz eines Phenolsulfonsäure-harnstoff-formaldehyd-Kondensats und 68 Teilen eines paraffinischen Mineralöls innig vermischt. Man erhält eine stabile ölige Dispersion.

VI Man vermischt 90 Gewichtsteile einer Mischung aus IIa mit IXa (1:100) mit 10 Gewichtsteilen N-Methyl-α-pyrrolidon und erhält eine Lösung, die zur Anwendung in Form kleinster Tropfen geeignet ist.

VII 20 Gewichtsteile einer Mischung aus IIa mit Va (10:1) werden in einer Mischung gelöst, die aus 80 Gewichtsteilen Xylol, 10 Gewichtsteilen des Anlagerungsproduktes von 8 bis 10 Mol Ethylenoxid an 1 Mol Ölsäure-N-monoethanolamid, 5 Gewichtsteilen Calciumsalz der Dodecylbenzolsulfonsäure und 5 Gewichtsteilen des Anlagerungsproduktes von 40 Mol Ethylenoxid an 1 Mol Ricinusöl besteht. Durch Ausgießen und feines Verteilen der Lösung in 100 000 Gewichtsteilen Wasser erhält man eine wäßrige Dispersion, die 0,02 Gew.% der Wirkstoffe enthält.

VIII 20 Gewichtsteile einer Mischung aus IIa mit Va (1:1) werden in einer Mischung gelöst, die aus 40 Gewichtsteilen Cyclohexanon, 30 Gewichtsteilen Isobutanol, 20 Gewichtsteilen des Anlagerungsproduktes von 7 Mol Ethylenoxid an 1 Mol Isooctylphenol und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gew.% der Wirkstoffe enthält.

IX 20 Gewichtsteile einer Mischung aus IIa mit IXa (1:1) werden in einer Mischung gelöst, die aus 25 Gewichtsteilen Cyclohexanol, 65 Gewichtsteilen einer Mineralölfraktion vom Siedepunkt 210 bis 280 °C und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gew.% der Wirkstoffe enthält.

Die erfindungsgemäßen Mittel sind geeignet, die Widerstandskraft der Pflanzen gegen verschiedene Formen des abiotischen Stresses zu erhöhen. Die Wirkungsart und die Wirksamkeit hängt dabei vor allem ab

a) von der Pflanzenart und Sorte,

b) von dem Zeitpunkt der Applikation, bezogen auf das Entwicklungsstadium der Pflanze und von der Jahreszeit,

c) von dem Applikationsort und -verfahren (Samenbeize, Bodenbehandlung oder Blattapplikation)

d) von klimatischen Faktoren, z.B. Temperatur, Niederschlagsmenge, außerdem auch Tageslänge und Lichtintensität

e) von der Bodenbeschaffenheit (einschließlich Düngung),

f) von der Formulierung bzw. Anwendungsform des Wirkstoffs und schließlich

g) von den angewendeten Mengen der einzelnen Wirkstoffe.

Aus der Reihe der verschiedenartigen Anwendungsmöglichkeiten der erfindungsgemäßen Mittel im

Pflanzenanbau werden einige nachstehend erwähnt.

A) Mit den neuartigen Mitteln läßt sich der Wasserverbrauch von Pflanzen erheblich reduzieren. Dies ist besonders wichtig für landwirtschaftliche Nutzflächen, die unter einem hohen Kostenaufwand künstlich bewässert werden müssen, z.B. in ariden oder semiariden Gebieten. Durch den Einsatz der erfindungsgemäßen Mittel läßt sich die Intensität der Bewässerung reduzieren und damit eine kostengünstigere Bewirtschaftung durchführen. Unter dem Einfluß der Präparate kommt es zu einer besseren Ausnutzung des vorhandenen Wassers, weil u.a.

- die Öffnungsweite der Stomata reduziert wird,
- eine dickere Epidermis und Cuticula ausgebildet werden,
- die Durchwurzelung des Bodens verbessert wird,
- das Mikroklima im Pflanzenbestand durch einen kompakteren Wuchs günstig beeinflußt wird.

Von Bedeutung ist diese Wirkung aber auch für Containerpflanzen, die z.B. bei Transport und Lagerung unter Wassermangelstreß geraten können. Weiterhin geraten viele Pflanzen - insbesondere Bäume oder Strächer - nach dem Verpflanzen unter Wassermangel, da ihr Wurzelsystem beschädigt ist. Auch hier lassen sich Schädigungen vermeiden oder zumindest reduzieren.

B) Die erfindungsgemäßen Mittel können eingesetzt werden, um die Resistenz von Pflanzen gegenüber niedrigen Temperaturen zu verbessern. Dies kann einerseits dadurch geschehen, daß die Empfindlichkeit gegenüber einem Kühlestreß (Temperaturen über 0°C; relevante Pflanzenarten z.B. Mais, Reis, Gurke, Kürbis) oder einem Kältestreß (Temperaturen unter 0°C) direkt durch ein Eingreifen in den physiologischen Zustand der Pflanze vermindert wird. Andererseits ist es mit den neuen Mitteln aber auch möglich, die Entwicklung der Pflanzen so zu verzögern, daß kälte- oder kühleempfindliche Stadien erst erreicht werden, wenn - bedingt z.B. durch die Jahreszeit - die Gefahr niedriger Temperaturen vorüber ist.

C) Die Empfindlichkeit von Pflanzen gegenüber hohen Salzkonzentrationen im Boden wird durch die neuen Mittel ebenfalls verbessert. Dies ist von Bedeutung für Standorte, die entweder durch die natürlichen Gegebenheiten oder aber als Folge von Bewässerungsmaßnahmen derart hohe Salzkonzentrationen im Boden aufweisen, daß viele Kulturpflanzenarten nicht oder nur unter Ertragseinbußen angebaut werden können. Auch die durch Streusalze verursachten Schäden, z.B. an Straßenbäumen, lassen sich durch die oben genannten Mittel vermeiden oder reduzieren.

In den folgenden Beispielen wird die Wirkung der erfindungsgemäß verwendbaren Mittel gezeigt, ohne die Möglichkeit weiterer Anwendungen auszuschließen.

Bei diesen Beispielen wurde nach der Methode von S.R. Colby (Weeds 15, 20) derjenige Wert E errechnet, der bei einer nur additiven Wirkung der Einzelwirkstoffe zu erwarten ist.

Die Berechnung erfolgt nach

$$E = X + Y - \frac{XY}{100}$$

wobei

X = Prozentsatz Wirkung mit Präparat A bei einer Aufwandmenge a

Y = Prozentsatz Wirkung mit Präparat B bei einer Aufwandmenge b

E = zu erwartende Wirkung (in % durch A + B bei den Aufwandmengen a + b bedeuten.

Ist der beobachtete Wert höher als der nach Colby errechnete Wert E, so liegt eine synergistische Wirkung vor.

Beispiel 1

Reduktion des Wasserverbrauchs von Kürbispflanzen

Kürbiskeimlinge der Sorte Riesenmelone, gelb genetzt, wurden in 200 ml Plastikbechern auf Vermiculit als Substrat unter Zugabe einer ausreichenden Menge an Nährsalzen angezogen [Tag-Nacht-Rhythmus von 14:10 Stunden mit 26°C: 18°C; Lichtintensität ca. 240 $\mu E\ m^{-2}\ sec^{-1}$ (400-700 nm); 45 % relative Feuchte; einheitlicher Wassergehalt des Substrates]. Alle Vegetationspunkte oberhalb der Kotyledonen wurden entfernt, um so ein Pflanzenmaterial zu erhalten, dessen transpirierende Oberfläche einheitlich durch die

Keimblätter bestimmt war. Etwaige Einflüsse der applizierten Substanzen auf die Sproßoberfläche und damit eine Verfälschung der Resultate konnten somit vermieden werden.

Nach dem vollständigen Ausdifferenzieren der Keimblätter wurde die Bewässerung mit wäßrigen Lösungen der Wirkstoffe IIb und Va und einer Kombination davon vorgenommen. Der jeweilige Wasserverbrauch wurde täglich über einen Zeitraum von 15 Tagen erfaßt. Die in der Tabelle angegebenen Resultate zeigen, daß es bei der Kombination der Wirkstoffe IIb und Va zu einer Verminderung des Wasserverbrauchs kommt, die intensiver ist als die Summe der Wassereinsparung bei einzeln applizierten Wirkstoffen. In der Kombination wird darüber hinaus zur Erzielung dieses Effektes deutlich weniger an den Wirkstoffen IIb und Va verbraucht.

Tabelle 1

| Wasserverbrauch von Kürbispflanzen unter dem Einfluß der Wirkstoffe IIb und Va | | | | |
|---|---|---|---|---|
| Wirkstoff(e) | Konzentration im Gießwasser [mol] | Gesamt-Wasserverbrauch nach 13 Tagen [ml/Pflanze] | Wassereinsparung gegenüber Kontrolle [%] | insgesamt eingesetzte Wirkstoffmenge [$\mu$g] |
| - | - | 168 | 0 | - |
| IIb | $5 \times 10^{-6}$ | 133 | 20,8 | 222 |
| IIb | $1 \times 10^{-6}$ | 162 | 3,6 | 54 |
| Va | $1 \times 10^{-7}$ | 135 | 19,6 | 3,7 |
| Va | $1 \times 10^{-8}$ | 168 | 0 | 0,5 |
| IIb + Va | $5 \times 10^{-6}$ + $1 \times 10^{-7}$ | 93 | 44,6[a] | 155 + 2,5 |
| IIb + Va | $5 \times 10^{-6}$ + $1 \times 10^{-8}$ | 107 | 36,3[b] | 179 + 0,3 |
| IIb + Va | $1 \times 10^{-6}$ + $1 \times 10^{-7}$ | 108 | 35,7[c] | 36 + 3,0 |
| IIb + Va | $1 \times 10^{-6}$ + $1 \times 10^{-8}$ | 112 | 33,3[d] | 37 + 0,3 |
| Die Wassereinsparung bei den verschiedenen Kombinationen ist: | | | | |

a E (berechnet nach Colby) = 36,3 %
E (beobachtet) = 44,6 %
b E (berechnet nach Colby) = 20,8 %
E (beobachtet) = 36,3 %
c E (berechnet nach Colby) = 22,5 %
E (beobachtet) = 35,7 %
d E (berechnet nach Colby) = 3,6 %
E (beobachtet) = 33,3 %

Beispiel 2

Verbesserung der Kühletoleranz bei Gurken

Gurkenpflanzen der Sorte Delikatess wurden über 15 Tage bei 30 °C in der Klimakammer vorkultiviert. Die Wirkstoffe IIa und Va wurden als $10^{-4}$ molare wäßrige Lösungen bis tropfnaß auf die Pflanzen (je 100 pro Versuchsvariante) gesprüht. Nach einer Einwirkungszeit von 24 Stunden wurden die Gurkenpflanzen für 10 Stunden einer Temperatur von ÷2 °C ausgesetzt, um danach wie vorher weiterkultiviert zu werden. Die Überlebensrate der Pflanzen wurde anschließend im Abstand von zwei Tagen durch visuelles Abschätzen

ermittelt. Die gefundenen Ergebnisse sind in der Fig. 1 dargestellt.

Aus der Fig. 1 geht hervor, daß der Kühleschaden der Gurkenpflanzen durch die einzeln applizierten Wirkstoffe IIa und Va deutlich reduziert werden kann, daß aber dennoch spätestens 12 Tage nach Kühleexposition alle Pflanzen abgestorben sind. Die Kombination beider Wirkstoffe führt dagegen durch synergistische Wechselbeziehungen zu einem deutlich verbesserten Effekt: 12 Tage nach dem Kühlestreß zeigt sich eine bei ca. 50 % stabilisierte Überlebensrate.

Bezogen auf den Tag 10 nach der Kühlebehandlung ist die Überlebensrate

| | | |
|---|---|---|
| E (berechnet nach Colby) | = | 7 % |
| E (beobachtet) | = | 52 % |

Beispiel 3

Verbesserung der Kühletoleranz bei Mais

Maispflanzen der Sorte Früher Goldprinz wurden über 10 Tage bei 30 °C in der Klimakammer vorkultiviert. Die Wirkstoffe IIa und Va wurden als $10^{-4}$ molare wäßrige Lösungen bis tropfnaß auf die Pflanzen (je ca. 100 pro Versuchsvariante) gesprüht. Nach einer Einwirkungszeit von einem Tag wurden die Maispflanzen für 24 Stunden einer Temperatur von +2 °C ausgesetzt, um danach wie vorher weiterkultiviert zu werden. Die Überlebensrate der Pflanzen wurde nach weiteren 15 Tagen durch visuelles Abschätzen ermittelt. Die gefundenen Ergebnisse sind in Tabelle 2 dargestellt.

Wie die Tabelle 2 zeigt, wird auch bei Maispflanzen ein Kühlestreß durch die Kombination der Wirkstoffe IIa und Va synergistisch in seiner Wirkung gemildert.

Tabelle 2

| Auswirkung von Kühlestreß auf die Überlebensrate von Maispflanzen unter dem Einfluß der Wirkstoffe IIa und Va | | |
|---|---|---|
| Wirkstoffe(e) | Konzentration in der Spritzbrühe [mol] | Überlebensrate [%] |
| - | - | 0 |
| Va | $10^{-4}$ | 51 |
| IIa | $10^{-4}$ | 25 |
| Va + IIa | $10^{-4}$ + $10^{-4}$ | 81 |

Die Überlebensrate ist

| | | |
|---|---|---|
| E (berechnet nach Colby) | = | 63,25 % |
| E (beobachtet) | = | 81,00 % |

Beispiel 4

Verbesserung der Kühletoleranz bei Mais

Maispflanzen der Sorte Dea wurden in 500 ml Kunststoffgefäßen mit Torfkultursubstrat unter Gewächshausbedingungen angezogen. Nach 7 Tagen erfolgte eine Bodenbehandlung mit Wirkstoff IIIa (N,N-Dimethylpiperidiniumchlorid, 36 mg/Topf). 12 Tage später wurde Wirkstoff IIb als wäßrige Emulsion auf die Pflanzen gesprüht (0,17 mg/Gefäß). Nach einer Einwirkungszeit von 2 Tagen wurden die Pflanzen für 6 Tage einer Temperatur von + 1,5 °C ausgesetzt. Anschließend wurden die Pflanzen im Gewächshaus für 12 Tage weiterkultiviert. Durch Kühle geschädigte Pflanzen starben in diesem Zeitraum ab. Durch die Wirkstoffe geschützte Pflanzen wuchsen in dieser Zeit weiter, so daß Unterschiede im Frischgewicht ein geeignetes Maß für Kühleschäden darstellen.

Tabelle 3 zeigt, daß die Kombination der Wirkstoffe IIb und IIIa zu einer synergistischen Verminderung der Kühleschäden führt.

Tabelle 3

| Auswirkung von Kühlestreß auf Maispflanzen unter dem Einfluß der Wirkstoffe IIb und IIIa | | |
|---|---|---|
| Wirkstoff(e) | applizierte Menge [mg] | Steigerung des Frischgewichts gegenüber Kontrolle [%] |
| - | - | 0 |
| IIb | 0,17 | 114 |
| IIIa | 36 | 38 |
| IIb + IIIa | 0,17 + 36 | 177 |

Beispiel 5

Reduktion des Wasserverbrauchs von Gerstenpflanzen

Jeweils 14 Gerstenpflanzen der Sorte Aura wurden in 5 Mitscherlichgefäßen angezogen. Als Substrat diente ein lehmiger Sandboden, dem eine ausreichende Menge an Nährsalzen zugeführt wurde. Die Kultur der Pflanzen erfolgte im Jahr 1988 unter den klimatischen Verhältnissen von Limburgerhof (Deutschland) bei freilandartigen Bedingungen. Die Pflanzen wurden lediglich bei ungewöhnlich niedrigen Temperaturen sowie bei Regenfällen durch eine Überdachung geschützt. Die Bewässerung der Pflanzen erfolgte nach Bedarf, wobei großer Wert auf einen gleichmäßigen Wassergehalt des Substrats gelegt wurde.

Am sechsten Tag nach der Vollblüte (01.06.1988) wurden die Sproßteile der Pflanzen mit wäßrigen Aufbereitungen der Wirkstoffe IVa (Chlormequatchlorid), Va, VIIa, VIIIa und IXa besprüht. Eine Behandlung mit dem Wirkstoff IIb erfolgte an den Tagen 6, 13 und 21 nach Vollblüte. Dazu wurden jeweils 6 mg des Wirkstoffs IIb in wäßriger Aufbereitung auf das Substrat appliziert. Der Wasserverbrauch der Pflanzen wurde bis zum Zeitpunkt der einsetzenden Totreife bestimmt. In der Tabelle 4 sind die Gesamtverbrauchswerte an Wasser vom Beginn der Behandlung bis zur einsetzenden Totreife angegeben. Dabei zeigt sich, daß der wassereinsparende Effekt von IIb durch die Substanzen IVa, Va, VIIa, VIIIa und IXa synergistisch gesteigert wird.

Tabelle 4

| Wirkstoff(e) | Aufwandmenge (mg/Gefäß) | Gesamtwasserverbrauch (ml/Gefäß) | Wassereinsparung gegenüber Kontrolle (%) |
|---|---|---|---|
| - | - | 10.309 | - |
| IIb | 18 | 8.764 | 15,0 |
| IVa | 10 | 10.069 | 2,3 |
| IIb + IVa | 18 + 10 | 7.809 | 24,3 |
| Va | 1,5 | 9.914 | 3,8 |
| IIb + Va | 18 + 1,5 | 7.919 | 23,2 |
| VIIa | 0,75 | 10.420 | 1,1 |
| IIb + VIIa | 18 + 0,75 | 8.181 | 20,6 |
| VIIIa | 0,75 | 9.828 | 4,7 |
| IIb + VIIIa | 18 + 0,75 | 8.006 | 22,3 |
| IXa | 1,5 | 10.266 | 0,4 |
| IIb + IXa | 18 + 1,5 | 7.894 | 23,4 |
| Die Wassereinsparung durch 3 x 6 mg an Wirkstoff IIb ist | | | |
| a) | in Kombination mit 10 mg an Wirkstoff IVa | | |
| | E (berechnet nach Colby) | = | 17,0 % |
| | E (beobachtet) | = | 24,3 % |
| b) | in Kombination mit 1,5 mg an Wirkstoff Va | | |
| | E (berechnet nach Colby) | = | 18,2 % |
| | E (beobachtet) | = | 23,2 % |
| c) | in Kombination mit 0,75 mg an Wirkstoff VIIa | | |
| | E (berechnet nach Colby) | = | 15,9 % |
| | E (beobachtet) | = | 20,6 % |
| d) | in Kombination mit 0,75 mg an Wirkstoff VIIIa | | |
| | E (berechnet nach Colby) | = | 19,0 % |
| | E (beobachtet) | = | 22,3 % |
| e) | in Kombination mit 1,5 mg an Wirkstoff IXa | | |
| | E (berechnet nach Colby) | = | 15,3 % |
| | E (beobachtet) | = | 23,4 % |

**Ansprüche**

1. Mittel zur Verbesserung des Verhaltens von Pflanzen gegenüber abiotischem Streß, enthaltend eine synergistische Mischung aus mindestens einem Wirkstoff aus der Gruppe der Abscisinsäure und ihren Analogen mit mindestens einem Wirkstoff aus der Gruppe der Wachstumsretardantien.

2. Mittel nach Anspruch 1, enthaltend Abscisinsäure I oder analoge acetylenische Verbindungen der allgemeinen Formel II

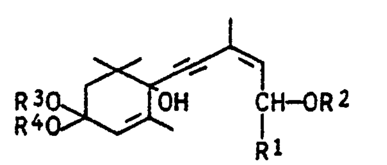

II,

worin $R^1$ Wasserstoff oder den Rest $OR^2$ bedeutet, der Rest $R^2$ für $C_1$-$C_6$-Alkyl steht oder in der $R^1$ für den Rest $OR^5$ steht und $R^5$ zusammen mit $R^2$ eine Alkylenkette $-(CH_2)_n-$, die durch eine oder zwei $C_1$-$C_4$-

Alkylgruppen substituiert sein kann, bildet, wobei n 2, 3 oder 4 ist sowie Gemische der Verbindungen I und II und als Wachstumsretardantien:

A) N,N-Dimethylpiperidiniumsalze III oder N,N,N-Trimethyl-N-2-chlorethylammoniumsalze IV

B) Norbornadiazetine der Struktur V und VI

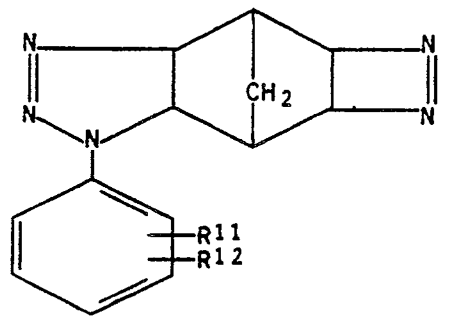

V

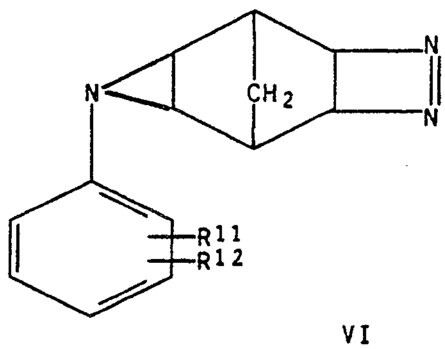

VI

worin die Reste $R^{11}$ und $R^{12}$ für Wasserstoff, Halogen, $C_1$-$C_4$-Alkyl, Trifluormethyl oder Nitro stehen,

C) Triazolverbindungen der Strukturen VII bis IX

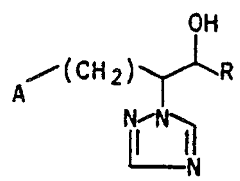

VII

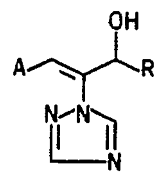

VIII

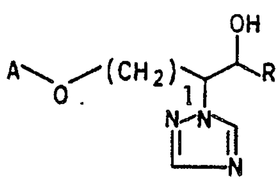

IX

wobei A unsubstituiertes oder durch Halogen, $C_1$-$C_4$-Alkyl, $C_1$-$C_4$-Alkoxy oder $CF_3$ substituiertes Phenyl oder Cyclohexyl bedeutet und R tert.-Butyl oder die Gruppe

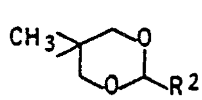

bedeutet, in der $R^2$ für Wasserstoff, Methyl oder Ethyl steht und l die Zahlen 1 oder 2 darstellt.

3. Mittel nach den Ansprüchen 1 und 2, enthaltend Abscisinsäure I und/oder acetylenische Verbindungen der Formeln IIa oder IIb

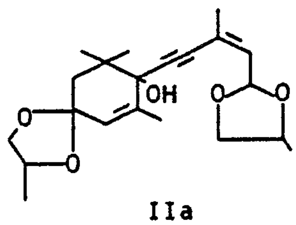

IIa

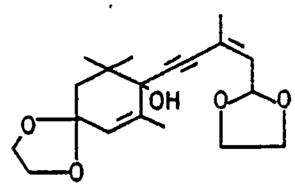

IIb

im Gemisch mit folgenden Wachstumsretardantien:

A) Die quartären Ammoniumsalze N,N-Dimethylpiperidiniumchlorid IIIa und N,N,N-Trimethyl-N-2-chlorethylammoniumchlorid IVa und/oder

B) Norbornadiazetin

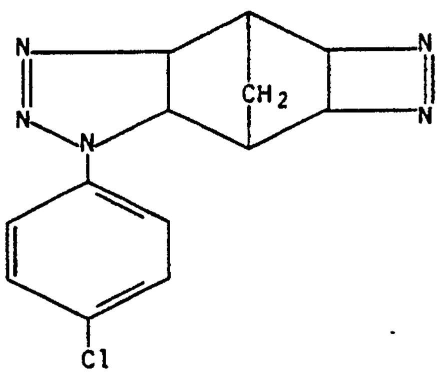

Va

und/oder

C) Triazolverbindungen der Formeln VIIa, VIIIa und IXa

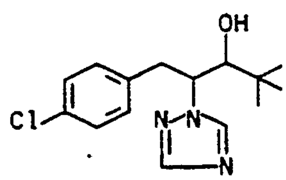

VIIa

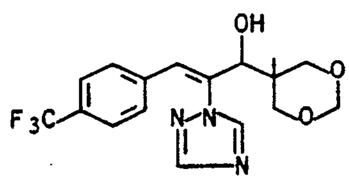

VIIIa

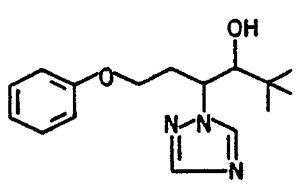

IXa

4. Mittel gemäß den Ansprüchen 1 bis 3, dadurch gekennzeichnet, daß es die Abscisinsäure bzw. Analoge und ein oder mehrere Verbindungen aus der Gruppe der Wachstumsretardantien im Gewichtsverhältnis von 0,1 bis 95 % enthält.

5. Verfahren zur Verbesserung des Verhaltens von Pflanzen gegenüber abiotischem Streß, dadurch gekennzeichnet, daß man Mittel gemäß den Ansprüchen 1 bis 3 auf Pflanzen oder deren Lebensraum

einwirken läßt.

6. Verwendung eines Mittels gemäß den Ansprüchen 1 bis 3 zur Verbesserung des Verhaltens von Pflanzen gegenüber abiotischem Streß.

89111040.5

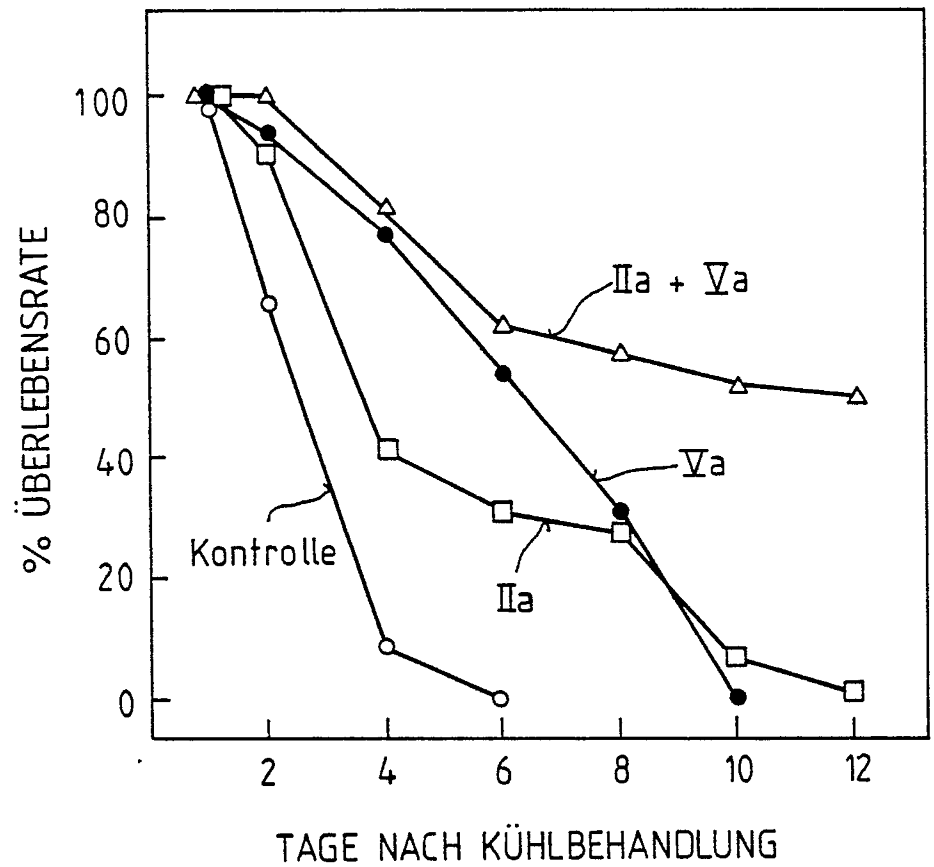

% ÜBERLEBENSRATE
100
80
60
40
20
0
2
4
6
8
10
12
TAGE NACH KÜHLBEHANDLUNG
IIa + Va
Va
IIa
Kontrolle